# FASCICULE DE BREVET EUROPEEN

(11) **EP 0 649 270 B1**
(45) Date de publication et mention de la délivrance du brevet: **15.01.2003**
(21) Numéro de dépôt: 94470031.9
(22) Date de dépôt: 26.09.1994
(51) Int. Cl.: H05B 7/06, C21C 5/52, F27B 3/08

(54) **Récipient métallurgique comportant une électrode de sole**
Metallurgisches Gefäss mit einer Bodenelektrode
Metallurgical vessel with a bottom electrode

(30) Priorité: 15.10.1993 FR 9312471
(43) Date de publication de la demande: 19.04.1995
(73) Titulaire: USINOR, 92800 Puteaux (FR)
(72) Inventeur: Destannes, Philippe, F-57000 Metz (FR)
(74) Mandataire: Ventavoli, Roger

(56) Documents cités:
- EP-A- 0 056 225
- EP-A- 0 133 925
- EP-A- 0 472 254
- FR-A- 2 577 311
- GB-A- 2 184 527
- US-A- 1 645 091

## Description

L'invention concerne un récipient métallurgique comportant au moins une électrode de sole, par exemple un four à arc d'aciérie à courant continu.

Un tel récipient comporte de manière générale, une cuve métallique revêtue intérieurement de matériau réfractaire, et au moins un dispositif de connexion électrique, couramment appelé "électrode de sole", qui traverse le fond du récipient pour assurer le passage de courant électrique entre une source d'énergie électrique et la charge de matériau métallique à fondre et/ou à chauffer qui se trouve à l'intérieur du récipient.

Dans le cas d'un four à arc d'aciérie à courant continu, le récipient comporte également au moins une électrode de voûte reliée à la source d'énergie électrique, placée au dessus de la charge et mobile verticalement, de manière à créer entre la charge et l'électrode de voûte un arc électrique.

On connaît plusieurs types d'électrodes de sole, en particulier une électrode de forme générale cylindrique comportant un barreau métallique dont l'extrémité supérieure affleure la surface du revêtement réfractaire, et dont l'autre extrémité est liée à un embout en matériau conducteur, proéminent sous la cuve et relié à la source de courant. Une telle électrode est décrite dans le document FR-A 2577311. La partie supérieure du barreau, qui fond partiellement en service, est généralement en acier pour un four d'aciérie, alors que l'embout refroidi intérieurement est en cuivre ou alliage de cuivre. Dans un mode de réalisation particulier, décrit dans le document EP-A-472254, l'interface entre ces deux parties se trouve à un niveau situé dans l'épaisseur du revêtement réfractaire, suffisamment haut pour éviter le plus possible l'échauffement et la fusion partielle du barreau. Pour supporter cette électrode, il est prévu que la partie supérieure ait un diamètre supérieur à celui de la partie inférieure, pour former un épaulement qui repose sur une bague entourant la partie inférieure et liée rigidement à la cuve.

On sait par ailleurs que, lors de l'utilisation de ces fours, suite aux cycles de fusion et resolidification de la partie supérieure de l'électrode de sole, celle-ci subit à chaque cycle, un léger déplacement selon sa direction axiale. Les déplacements, cumulés au cours de cycles, font monter l'électrode vers l'intérieur du four. Pour éviter cette remontée de l'électrode, il a déjà été envisagé, dans des montages d'un type différent de celui décrit ci-dessus, de munir l'électrode de sole de moyens de rappel destinés à contrer ces déplacements.

Ainsi dans le document FR-A-2577311 déjà cité, il est décrit une électrode de sole constituée d'un barreau en acier de diamètre constant dont l'extrémité inférieure est entourée par une chemise refroidie. Dans ce cas, l'extrémité inférieure du barreau est liée mécaniquement à la cuve du four par des moyens de support, lesquels comportent aussi des moyens de rappel élastique de l'électrode vers le bas.

L'application de tels moyens à l'électrode de sole du type décrit en premier lieu ne permet cependant pas de prévenir efficacement et durablement sa remontée, car des matériaux peuvent pénétrer, par exemple par infiltration, entre l'épaulement du barreau et la bague, et empêcher le rappel de l'électrode vers le bas.

Au cours d'une campagne de fonctionnement du four, les déplacements cumulés de l'électrode vers le haut, peuvent conduire non seulement à une réduction de la hauteur du barreau par une consommation de l'électrode par le haut, mais aussi à rapprocher dangereusement l'embout inférieur refroidi du front de fusion.

La présente invention a pour but de résoudre ces problèmes et d'éviter toute remontée durable du barreau métallique, et ainsi d'assurer une durée de vie plus longue pour l'électrode de sole, et de réduire les risques de contact de métal en fusion avec l'embout refroidi.

Avec ces objectifs en vue, l'invention a pour objet un récipient métallique équipé d'une électrode de sole, comportant :
- une cuve et un revêtement réfractaire interne de la cuve
- une électrode de sole s'étendant au travers de la paroi de fond de la cuve et du revêtement et comprenant, superposés, un barreau qui affleure la surface du revêtement réfractaire et un embout fixé sous le barreau, refroidi intérieurement, de diamètre inférieur à celui du barreau, et lié à celui-ci par sa surface frontale supérieure, à un niveau situé dans l'épaisseur du revêtement réfractaire, et
- une bague, solidaire de la cuve, qui entoure l'embout, et dont la face supérieure est située sous le barreau pour le supporter.

Selon l'invention, le récipient est caractérisé en ce que le barreau se prolonge vers la paroi de fond par une jupe qui entoure latéralement l'embout refroidi.

Grâce à l'invention, le phénomène de remontée progressive de l'électrode peut être évité. En effet, cette remontée se produit lors de la resolidification de la partie supérieure de l'électrode et du refroidissement de l'ensemble, l'extrémité supérieure de l'électrode restant bloquée au niveau de la surface de la sole réfractaire, et le bas de l'électrode étant tiré vers le haut sous l'effet du rétraint de refroidissement. Les moyens de rappel élastique évoqués précédemment permettent en principe de ramener l'électrode dans sa position d'origine, dès lors que, au début du cycle de fusion suivant, l'extrémité supérieure refond, supprimant ainsi le blocage et autorisant la descente de l'électrode.

Mais, lors de la montée de l'électrode, un jeu se créé entre l'épaulement et la bague de support. Des matériaux provenant du bain de fusion, en particulier des métaux lourds à bas point de fusion qui se sont infiltrés dans le revêtement réfractaire, peuvent alors, étant encore liquides, pénétrer dans ce jeu et s'y solidifier, empêchant ensuite le retour de l'électrode.

L'invention permet d'éviter que ces infiltrations ne pénètrent dans le jeu inévitable qui se crée entre l'électrode et la bague, en abaissant le bord inférieur du barreau jusqu'à un niveau suffisamment froid pour qu'il n'y ait plus d'infiltrations liquides.

Selon une première variante de l'invention, la bague de support est située sous le bord inférieur de la jupe, celle-ci étant préférentiellement en contact avec la surface latérale de l'embout. Ainsi, la jupe est elle-même refroidie, et favorise la solidification et donc l'arrêt des infiltrations liquides qui s'en approchent.

Selon une autre variante, le diamètre intérieur de la jupe est supérieur au diamètre extérieur de l'embout, et la bague pénètre vers le haut entre la jupe et l'embout. Dans ce cas, le jeu qui se créé entre l'électrode et la bague lors de la remontée de l'électrode, est recouvert par la jupe qui agit comme déflecteur pour les infiltrations.

Préférentiellement, un espace annulaire de diamètre extérieur au moins égal à celui de la jupe est ménagé entre le bord inférieur de la jupe, la bague et le revêtement réfractaire. Cette disposition permet d'éviter que des infiltrations qui parviendraient en dessous de la jupe, entre celle-ci et le réfractaire avoisinant ne s'y retrouvent bloquées.

D'autres caractéristiques et avantages apparaîtront dans la description qui suit d'un four à arc d'aciérie à courant continu conforme à l'invention, en référence à la planche de dessins annexée sur laquelle :
- la figure 1 est une vue schématique partielle en coupe de la zone du fond du four comportant une électrode de sole, selon une première variante ;
- la figure 2 est une vue similaire, selon une deuxième variante.

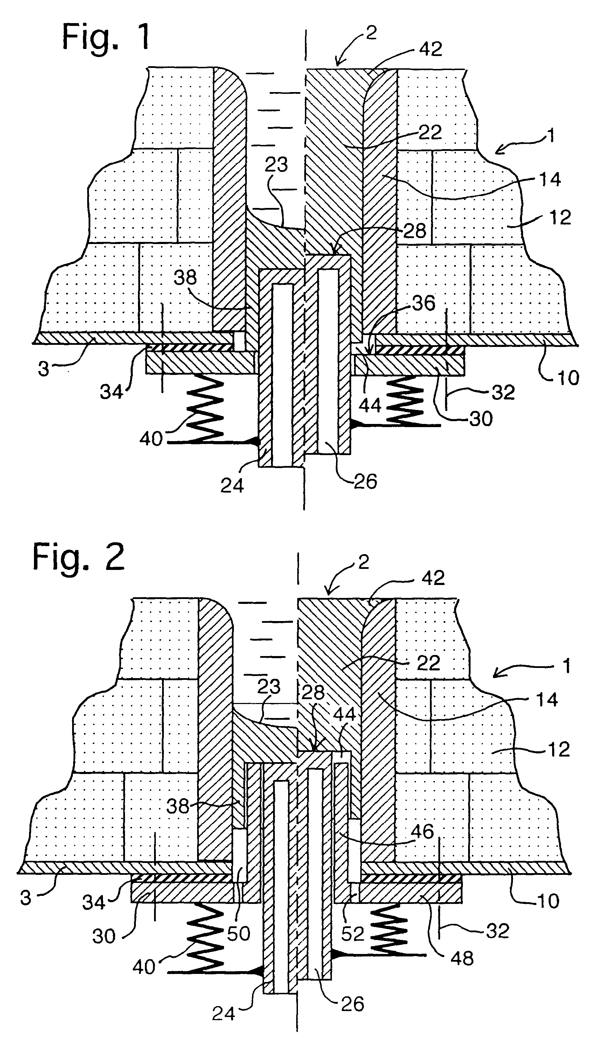

A la figure 1, on a représenté la zone du fond d'un four à arc 1 d'aciérie à courant continu, dans laquelle est implantée une électrode de sole 2. Le four comporte une cuve métallique 3 ayant une paroi de fond 10, un revêtement interne 12 en matériau réfractaire constituant la sole, et une virole 14 également en matériau réfractaire entourant l'électrode 2, qui traverse, sensiblement perpendiculairement, la paroi de fond 10 et la sole réfractaire.

L'électrode de sole 2 comporte deux parties :
- une partie supérieure, ou barreau 22, en acier, dont l'extrémité supérieure affleure la surface de la sole réfractaire, et assure le contact électrique avec les matériaux constituant la charge métallifère du four (non représentée) et,
- une partie inférieure, ou embout 24, en métal bon conducteur de l'électricité et de la chaleur, par exemple en cuivre.

L'embout 24 est refroidi intérieurement par circulation ou projection d'un fluide de refroidissement dans des canaux 26 aménagés à l'intérieur. Il est relié, par des moyens de connexion non représentés, à une source de courant électrique. En outre, il est solidarisé, par sa face frontale supérieure 28, au barreau 22, par soudage, brasage ou tout autre moyen de liaison permettant d'obtenir un bon contact électrique et thermique. Cette liaison est située à un niveau situé dans l'épaisseur du revêtement réfractaire 12, de sorte que l'embout 24 pénètre à l'intérieur de la cuve du four est que l'effet refroidissant qu'il exerce sur le barreau 22 s'étende suffisamment haut pour éviter que le front de fusion 23 du barreau, en cours de fonctionnement, ne s'approche de la paroi de fond 10.

Une bague 30 est solidarisée à la paroi 10 de la cuve par des moyens de fixation représentés uniquement par leurs axes 32, tout en étant isolée électriquement de celle-ci par une pièce isolante 34.

La bague 30 entoure l'embout 24, et sa face supérieure 36 supporte une jupe 38 formée par un prolongement vers le bas du barreau 22, cette jupe entourant la partie supérieure de l'embout 24.

Un système de rappel élastique, tel que des ressorts 40, est placé entre la bague 30 et l'extrémité inférieure de l'embout 24, pour exercer sur celui-ci un effort dirigé vers le bas.

Sur la partie gauche de la figure 1, le dispositif est représenté dans la position qu'il prend soit lors du montage de l'électrode, avant toute utilisation, soit lorsque la partie supérieure du barreau 22 est fondue, au cours du fonctionnement du four. Sur la partie droite, l'électrode est représentée dans la position qu'elle prend après resolidification du barreau, suite à un arrêt du four suffisamment long pour que le refroidissement consécutif conduise à cette resolidification.

Dans cette dernière position, et suite au retrait de solidification et de refroidissement du barreau 22, la partie inférieure de celui-ci, la jupe 38 et l'embout 24 se trouvent déplacés vers le haut, l'extrémité supérieure du barreau 22 étant bloquée sur la virole réfractaire 14 par l'évasement 42 provoqué par l'érosion inévitable du réfractaire.

Il s'ensuit qu'un jeu 44 apparaît entre le bord inférieur de la jupe et la bague 30. Toutefois, comme ce jeu est situé très bas, au niveau de la paroi 10 de la cuve, et donc dans une zone suffisamment froide, il n'y a pas de risque que des matériaux liquides tels que des métaux lourds et à bas point de fusion comme le plomb, qui se seraient infiltrés dans le revêtement 12 ou la virole 14 réfractaire, parviennent dans ce jeu 44. En effet, ces éventuelles infiltrations se seraient refroidies et solidifiées avant d'atteindre la zone froide où se trouve ledit jeu.

Le blocage de ces infiltrations est d'autant plus marqué que, comme représenté, la jupe 38 est en contact avec l'embout 24, et se trouve donc directement refroidie par celui-ci, ce qui contribue à l'abaissement de la température du réfractaire avoisinant le bas de la jupe.

En conséquence de ces effets, le jeu 44 reste libre, et, lorsque l'électrode est retirée vers le bas par l'action des ressorts 40, suite à la refusion partielle du barreau 22, elle peut revenir dans sa position de base, représentée sur la partie gauche de la figure, où la jupe 38 vient s'appuyer sur la bague 30.

Ainsi, au cours des cycles de fusion et resolidification du barreau 22, l'électrode peut toujours revenir dans sa position basse, alors que si des matériaux parvenaient à pénétrer dans le jeu 44, le rappel de l'électrode vers le bas ne pourrait s'effectuer totalement, ce qui conduirait progressivement à un déplacement irréversible de l'électrode vers le haut.

Il est à noter que le rappel de l'électrode vers le bas pourrait également s'effectuer par l'effet de son propre poids.

Préférentiellement, la bague 30 peut comporter des moyens de refroidissement, par exemple des canaux de circulation d'un fluide réfrigérant, ce qui améliore encore le maintien à basse température de la zone avoisinant le bas de la jupe 38.

Un autre mode de réalisation de l'invention est représenté au dessin de la figure 2. Dans cette variante, la bague de support de l'électrode comporte une partie tubulaire 46 qui entoure la partie supérieure de l'embout 24 en s'étendant vers le haut depuis sa base formant une collerette 48, fixée à la paroi 10, jusqu'à hauteur de la face frontale supérieure 28 de l'embout.

Le diamètre intérieur de la jupe 38 est supérieure au diamètre de l'embout 24 de manière à ménager entre ces pièces un espace dans lequel pénètre la partie tubulaire 46 de la bague 30.

Dans cette variante, l'électrode repose sur la bague 30 non plus par le bord inférieur de la jupe 38, mais par la surface du barreau constituant le fond de l'espace annulaire délimité entre l'embout et la jupe, ainsi que représenté sur la partie gauche de la figure 2. C'est donc à cet endroit que se crée le jeu 44 entre le barreau 22 et la bague 30 lors de la montée de l'électrode.

Ce jeu est donc situé dans une zone relativement chaude, mais comme il est recouvert par la jupe 38, aucune infiltration ne peut y pénétrer.

La jupe 38 ne descend pas jusqu'au niveau de la paroi 10 de la cuve. Il suffit que sa hauteur soit suffisante pour recouvrir le jeu 44 avec une bonne marge de sécurité, c'est à dire que la hauteur de la jupe soit supérieure à la valeur maximale que peut atteindre ce jeu.

Par ailleurs, un espace annulaire 50, de diamètre extérieur au moins égal à celui de la jupe, doit être ménagé entre le bord inférieur de la jupe, la bague 30 et le revêtement réfractaire 12 ou la virole réfractaire 14, pour permettre le libre mouvement de la jupe lors des déplacements verticaux du barreau. A cet effet, la hauteur de cet espace libre annulaire 50 est au moins égale à ladite valeur maximale du jeu, et préférentiellement nettement supérieure, pour que des matériaux qui parviendraient par infiltration dans cet espace annulaire 50 ne puissent le combler progressivement, ce qui risquerait à la longue de bloquer les déplacements de l'électrode.

Comme représenté, cet espace s'étend préférentiellement jusqu'à la collerette 48, dans laquelle des orifices 52 sont réalisés, pour mettre l'espace 50 en communication avec l'extérieur du four.

L'invention n'est pas limitée aux deux variantes décrites ci-dessus à titre d'exemples.

En particulier, la bague 30 pourrait également dans le cas de la première variante, comporter une partie tubulaire entourant l'embout et s'étendant vers le haut, dans la mesure où le bord supérieur de cette partie tubulaire reste suffisamment proche de la paroi de fond du four pour être dans une zone froide où des infiltrations liquides ne peuvent parvenir.

Egalement, dans la deuxième variante, le fond de l'espace délimité entre l'embout et la jupe peut être situé plus bas ou légèrement plus haut que la face supérieure de l'embout.

Le système de rappel élastique de l'électrode peut être constitué par d'autres moyens que les ressorts 40. En particulier l'effort de rappel peut être exercé par les moyens de connexion électrique, liés à l'embout.

L'invention s'applique en particulier aux fours à arc à courant continu pour le traitement de matières métalliques, notamment la fusion de l'acier, mais aussi, de manière générale à tout récipient métallurgique comportant une électrode qui traverse sa paroi, perpendiculairement ou inclinée par rapport à celle-ci, et qui est susceptible de subir des déplacements axiaux, transversalement à cette paroi.

## Revendications

1. Récipient métallurgique comportant :
- une cuve (3) et un revêtement (12) réfractaire interne de la cuve ;
- une électrode (2) de sole s'étendant au travers de la paroi de fond (10) de la cuve (3) et du revêtement (12) et comprenant, superposés, un barreau (22) qui affleure la surface du revêtement réfractaire et un embout (24) fixé sous le barreau (22), refroidi intérieurement, de diamètre inférieur à celui du barreau, et lié à celui-ci par sa surface frontale supérieure (28), à un niveau situé dans l'épaisseur du revêtement réfractaire (12), ladite électrode étant susceptible de se déplacer vers le bas,
- une bague de support (30), solidaire de la cuve (10), qui entoure l'embout (24), et dont la face supérieure (36) est située sous le barreau,
- de moyens de rappel élastiques (40) de l'électrode vers le bas,
**caractérisé en ce que** le barreau (22) se prolonge vers la paroi de fond (10) par une jupe (38) qui entoure latéralement l'embout (24).

2. Récipient selon la revendication 1, **caractérisé en ce que** le diamètre intérieur de la jupe (38) est supérieur au diamètre extérieur de l'embout (24), et la bague (46) pénètre vers le haut entre la jupe et l'embout.

3. Récipient selon la revendication 2, **caractérisé en ce qu'**un espace annulaire (50) de diamètre extérieur au moins égal à celui de la jupe est ménagé entre le bord inférieur de la jupe, la bague et le revêtement réfractaire.

4. Récipient selon l'une des revendications 2 et 3, **caractérisé en ce que** le chant supérieur de la bague (46) est situé sensiblement au niveau de la surface frontale supérieure (28) de l'embout.

5. Récipient selon la revendication 1, **caractérisé en ce que** la bague (30) est située sous le bord inférieur de la jupe (38).

6. Récipient selon la revendication 5, **caractérisé en ce que** la jupe (38) est en contact avec l'embout (24).

7. Récipient selon l'une quelconque des revendications 1 à 6, **caractérisé en ce que** la bague (30, 46) comporte des moyens de refroidissement.

8. Récipient selon l'une quelconque des revendications 1 à 7, **caractérisé en ce** les moyens (40) de rappel élastique exerçant sur l'électrode de sole (2) une force de rappel dirigée vers l'extérieur du récipient.

9. Récipient selon l'une quelconque des revendications précédentes **caractérisé en ce qu'**il est un four à arc à courant continu pour le traitement des matières métallifères, notamment la fusion de l'acier.

## Patentansprüche

1. Metallurgischer Ofen, umfassend:
- ein Wanne (3) und eine feuerfeste innere Auskleidung (12) der Wanne;
- eine Bodenelektrode (2), die sich quer durch die Bodenwand (10) der Wanne (3) und die Auskleidung (12) erstreckt und übereinander angeordnet einen Stab (22), der bündig mit der Oberfläche der feuerfesten Auskleidung abschließt, und einen unter dem Stab (22) befestigten, innerlich gekühlten Ansatz (24) umfaßt, dessen Durchmesser kleiner ist als der des Stabs und der mit diesem an seiner oberen Stirnfläche (28) verbunden ist, auf einer Höhe, die in der Dicke der feuerfesten Auskleidung (12) liegt, wobei die Elektrode in der Lage ist, sich nach unten zu verschieben,
- einen mit der Wanne (10) fest verbundenen Stützring (30), der den Ansatz (24) umgibt und dessen Oberseite (36) unter dem Stab liegt,
- elastische Mittel (40) zum Rückstellen der Elektrode nach unten,
**dadurch gekennzeichnet, daß** sich der Stab (22) zur Bodenwand (10) hin in einer Schürze (38) fortsetzt, die den Ansatz (24) seitlich umgibt.

2. Ofen nach Anspruch 1, **dadurch gekennzeichnet, daß** der Innendurchmesser der Schürze (38) größer ist als der Außendurchmesser der Ansatzes (24) und der Ring (46) nach oben zwischen die Schürze und den Ansatz dringt.

3. Ofen nach Anspruch 2, **dadurch gekennzeichnet, daß** ein ringförmiger Raum (50) mit einem Außendurchmesser, der mindestens dem der Schürze entspricht, zwischen dem unteren Rand der Schürze, dem Ring und der feuerfesten Auskleidung vorgesehen ist.

4. Ofen nach einem der Ansprüche 2 und 3, **dadurch gekennzeichnet, daß** sich die Oberkante des Ringes (46) im wesentlichen auf der Höhe der oberen Stirnfläche (28) des Ansatzes befindet.

5. Ofen nach Anspruch 1, **dadurch gekennzeichnet, daß** der Ring (30) unter dem unteren Rand der Schürze (38) liegt.

6. Ofen nach Anspruch 5, **dadurch gekennzeichnet, daß** die Schürze (38) mit dem Ansatz (24) in Berührung ist.

7. Ofen nach irgendeinem der Ansprüche 1 bis 6, **dadurch gekennzeichnet, daß** der Ring (30, 46) Mittel zum Kühlen aufweist.

8. Ofen nach irgendeinem der Ansprüche 1 bis 7, **dadurch gekennzeichnet, daß** die elastischen Rückstellmittel (40) auf die Bodenelektrode (2) eine zur Außenseite des Ofens hin gerichtete Rückstellkraft ausüben.

9. Ofen nach irgendeinem der vorhergehenden Ansprüche, **dadurch gekennzeichnet, daß** er ein Gleichstrom-Lichtbogenofen zur Behandlung von metallhaltigen Materialien, insbesondere zum Schmelzen von Stahlt ist.

## Claims

1. Metallurgical vessel comprising:
- a tank (3) and an internal refractory lining (12) for the tank;
- a bottom electrode (2) passing through the bottom wall (10) of the tank (3) and of the lining (12) and comprising, so as to be superposed, a bar (22) which is flush with the surface of the refractory lining and, fixed beneath the bar (22), an internally cooled end-piece (24) which has a smaller diameter than that of the bar and is linked to the latter via its upper transverse surface (28) at a level lying within the thickness of the refractory lining (12), the said electrode being able to be moved downwards;
- a support ring (30), fastened to the tank (10), which surrounds the end-piece (24) and the upper face (36) of which ring lies beneath the bar and
- elastic return means (40) for returning the electrode downwards,
**characterized in that** the bar (22) is extended towards the bottom wall (10) by a skirt (38) which surrounds the end-piece (24) laterally.

2. Vessel according to Claim 1, **characterized in that** the internal diameter of the skirt (38) is greater than the external diameter of the end-piece (24) and the ring (46) penetrates upwards between the skirt and the end-piece.

3. Vessel according to Claim 2, **characterized in that** an annular space (50) of external diameter at least equal to that of the skirt is left between the lower edge of the skirt, the ring and the refractory lining.

4. Vessel according to either of Claims 2 and 3, **characterized in that** the upper end face of the ring (46) lies substantially level with the upper transverse surface (28) of the end-piece.

5. Vessel according to Claim 1, **characterized in that** the ring (30) lies beneath the lower edge of the skirt (38).

6. Vessel according to Claim 5, **characterized in that** the skirt (38) is in contact with the end-piece (24).

7. Vessel according to any one of Claims 1 to 6, **characterized in that** the ring (30, 46) includes cooling means.

8. Vessel according to any one of Claims 1 to 7, **characterized by** the elastic return means (40) exerting on the bottom electrode (2) a return force directed towards the outside of the vessel.

9. Vessel according to any one of the preceding claims, **characterized in that** it is a DC arc furnace for treating metalliferous materials especially for the smelting of steel.
